# EUROPÄISCHE PATENTSCHRIFT

(11) **EP 1 235 984 B1**
(45) Veröffentlichungstag und Bekanntmachung des Hinweises auf die Patenterteilung: **07.06.2006**
(21) Anmeldenummer: 00993332.6
(22) Anmeldetag: 07.12.2000
(51) Int. Cl.: F04B 17/03, F04B 1/12

(54) **FAHRZEUGBREMSANLAGE MIT EINER MOTOR-/PUMPENEINHEIT**
VEHICLE BRAKING SYSTEM WITH A MOTOR/PUMP UNIT
DISPOSITIF DE FREINAGE D'UN VEHICULE DOTE D'UN BLOC MOTEUR/POMPE

(30) Priorität: 07.12.1999 DE 19958936
(43) Veröffentlichungstag der Anmeldung: 04.09.2002
(73) Patentinhaber: Lucas Varity GmbH, 56070 Koblenz (DE)
(72) Erfinder: MOHR, Kurt, 56283 Halsenbach (DE)
(74) Vertreter: Schmidt, Steffen J.
(86) Internationale Anmeldenummer: PCT/EP2000/012350
(87) Internationale Veröffentlichungsnummer: WO 2001/042655

(56) Entgegenhaltungen:
- DE-U- 7 245 277

## Beschreibung

### Hintergrund der Erfindung

Die Erfindung betrifft eine Fahrzeugbremsanlage, die eine Motor-/Pumpeneinheit mit einem Elektromotor und wenigstens eine Pumpe zum Fördern von Bremsfluid aufweist. Der Elektromotor weist dabei einen Motorstator auf, in dem ein Motorläufer drehbar angeordnet ist. Die Pumpe ist im wesentlichen innerhalb des Motorläufers angeordnet und von diesem antreibbar. Ferner betrifft die Erfindung eine derartige Motor-/Pumpeneinheit.

Die Motor-/Pumpeneinheit dient zum Fördern von Bremsfluid zu und von Radbremsen der Fahrzeugbremsanlage, um diese Radbremsen zu betätigen bzw. zu lösen. Derartige Fahrzeugbremsanlagen werden auch als elektrohydraulische Bremsanlagen bezeichnet, die im sogenannten Antiblockier-, Antischlupf- oder Fahrdynamikregelbetrieb betrieben werden können. Die Motor-/Pumpeneinheit kann unmittelbar an einer Radbremse eines Fahrzeugs angeordnet sein, oder als zentrales Versorgungsorgan für mehrere Radbremsen dienen.

### Stand der Technik

Aus der US 4 435 021 A ist ein Bremssystem mit einem Fahrzeugbremsaktuator bekannt, bei dem ein Elektromotor eine ortsfest angebrachte Statorwicklung und einen darin drehbar angebrachten Läufer aufweist. Der Läufer trägt mehrere Axialkolben, die sich an einer geneigten Endfläche abstützen und mit dieser eine Schrägscheibenpumpe bilden. Im Betrieb der Schrägscheibenpumpe tritt an den Axialkolben Bremsfluid aus, das den Läufer umspült. Das Bremsfluid tritt auch in einen Spalt zwischen Statorwicklung und Läufer, führt dort zu einem hohen Fluidreibungswiderstand und verringert den magnetischen Fluß zwischen Statorwicklung und Läufer. Der Elektromotor weist daher eine geringe Dynamik, d.h. ein schlechtes Anlauf- und Ansprechverhalten auf.

### Der Erfindung zugrundeliegendes Problem

Aufgabe der Erfindung ist es das oben genannte Problem zu beheben und insbesondere eine Fahrzeugbremsanlage mit einer Motor-/Pumpeneinheit zu schaffen, die Bremsfluid hochdynamisch zu fördern vermag.

### Erfindungsgemäße Lösung

Die Aufgabe ist erfindungsgemäß durch eine Fahrzeugbremsanlage mit einer Motor-/Pumpeneinheit gelöst, die die oben genannten Merkmale aufweist und derart weitergebildet ist, daß der Motorstator und mindestens ein zum Motorstator gerichteter Abschnitt des Motorläufers einen elektromagnetischen Bereich definieren, mindestens die Pumpe einen hydraulischen Bereich definiert, und mindestens ein Dichtelement vorgesehen ist, das den elektromagnetischen Bereich von dem hydraulischen Bereich fluiddicht trennt, wobei sich zwischen dem Motorstator (16) und dem Motorläufer nur ein Luftspalt befindet.

Das erfindungsgemäß angeordnete Dichtelement trennt den Motorstator und den ihm zugewandten Abschnitt des Motorläufers vom hydraulischen Bereich der Pumpe ab, in dem sich Bremsfluid befindet. Dadurch kann in den Spalt zwischen Motorstator und Motorläufer kein Bremsfluid gelangen. Im Spalt entsteht daher kein Fluidreibungswiderstand und die Dynamik des Elektromotors ist erheblich vergrößert. Mit dieser Maßnahme wird auch der Wirkungsgrad des Elektromotors erhöht. Es ist eine regeloptimierte Kombination von Elektromotor und Pumpe geschaffen. Ferner ist der elektromagnetische Bereich vom hydraulischen Bereich fluiddicht getrennt, so daß kein Schmutz in den elektromagnetischen Bereich gelangen kann. Verschmutzung und Beschädigung des Motorstators, beispielsweise durch aggressives Bremsfluid, sind damit sicher verhindert. Der Elektromotor und die Pumpe sind dabei besonders kompakt in sogenannter Cartridge-Bauweise gestaltet. Es können auch mehrere Pumpen vom Motorläufer insbesondere radial umgeben sein, um beispielsweise für jede Radbremse eine eigene Druckquelle bereitzustellen.

Die Aufgabe ist erfindungsgemäß auch mit einer derartigen Motor-/Pumpeneinheit gelöst.

### Vorteilhafte Ausgestaltungen

Die Fahrzeugbremsanlage ist vorteilhaft so weitergebildet, daß sich zwischen dem Motorstator und dem Motorläufer nur ein Luftspalt befindet. Bei dem in der US 4 435 021 A beschriebenen Fahrzeugbremsaktuator befindet sich der gesamte Motorläufer im hydraulischen Bereich. Daher ist die Motorwicklung innen von einer Trennwand umgeben, die sie vom hydraulischen Bereich und auch vom Motorläufer abgrenzt. Bei der erfindungsgemäßen Lösung kann auf diese Trennwand hingegen verzichtet werden. Der Abstand zwischen dem Motorstator und dem Motorläufer kann daher sehr klein gestaltet werden. Der Elektromotor weist dadurch einen zusätzlich höheren Wirkungsgrad und ein weiter verbessertes Ansprech- und Anlaufverhalten auf.

Eine vorteilhafte Weiterbildung sieht vor, daß der Motorstator in einem Gehäuse ortsfest angebracht ist, und das Dichtelement ringförmig zwischen dem Motorläufer und dem Gehäuse ausgebildet ist. Bei dieser besonders einfachen Gestaltung der Erfindung kann als Dichtelement ein herkömmlicher, preisgünstiger Dichtring verwendet werden, der aus einem großen Sortiment ausgewählt werden und daher besonders gut auf die zu lösende Dichtungsaufgabe abgestimmt sein kann.

Bei einer vorteilhaft weitergebildeten Fahrzeugbremsanlage ist der Motorläufer im Gehäuse um eine Drehachse drehbar mittels zwei Lagern abgestützt, die an den axialen Endbereichen des Motorläufers angeordnet sind. Die Lager ermöglichen eine präzise Führung des Motorläufers, wobei dessen Position unabhängig von der Pumpe eingestellt werden kann.

Der Motorläufer ist vorteilhaft im wesentlichen becherförmig gestaltet und umfaßt an seinem Boden eine koaxial angebrachte und mitnehmend verbundene Antriebswelle zum Antreiben der Pumpe. Weil die Becherform nur zu einer Seite geöffnet ist, kann bei einer derartigen Gestaltung in dem Motorläufer ein geschlossener Raum für die Pumpe besonders einfach abgedichtet werden. Beispielsweise kann hierzu ein Dichtelement an der Öffnung des becherförmigen Motorläufers angeordnet sein.

Vorteilhaft weist jedoch das Gehäuse einen im wesentlichen hohlzylindrischen Gehäuseabschnitt auf, der radial innen und koaxial in den becherförmigen Motorläufer ragt, und das Dicht-element ist zwischen dem hohlzylindrischen Gehäuseabschnitt und der Antriebswelle angeordnet. Dadurch wird der Motorläufer an einer verhältnismäßig kleinen Fläche abgedichtet und es kann ein Dichtelement mit einem kleinen Durchmesser verwendet werden. Derartige Dichtelemente weisen einen geringeren Reibwiderstand auf und benötigen nur wenig Bauraum. Weil zwischen dem Motorläufer und der Pumpe der Gehäuseabschnitt angeordnet ist, tritt außerdem zwischen Motorläufer und Pumpe keine Strömungsreibung auf.

Bei einer vorteilhaften Ausgestaltung ist der Motorläufer im wesentlichen hohlzylindrisch und an einer inneren Mantelfläche mit der Pumpe mitnehmend verbunden. Damit ist eine besonders einfache Kopplung zwischen der Pumpe und dem Motorläufer realisiert, die beispielsweise mittels einer Feder/Nut-Verbindung gestaltet sein kann. Dabei können der Motorläufer und die Pumpe derart elastisch verbunden werden, daß wenig Körperschall von der Pumpe nach außen auf den Motorläufer und das Gehäuse übertragen wird.

Bei dieser Ausgestaltung ist vorteilhaft je ein Dichtelement zwischen den axialen Endabschnitten des Motorläufers und dem Gehäuse angeordnet. Axial steht damit besonders viel Bauraum für die Pumpe zur Verfügung. Ferner kann die Pumpe den Motorläufer axial durchsetzen.

Die Pumpe wird vorteilhaft als Schrägscheibenpumpe gestaltet, bei der mit dem Motorläufer ein Pumpenrotor mitnehmend gekoppelt ist, in dem mindestens ein Axialkolben verschiebbar geführt ist, der sich an einer am Gehäuse ortsfest angebrachten Schrägscheibe abstützt. Diese Gestaltung wird zusammen mit einem hohlzylindrischen Motorläufer eingesetzt, an den der Pumpenrotor unmittelbar gekoppelt ist. Der Pumpenrotor kann dabei auch einstückig mit dem Motorläufer ausgebildet sein.

Eine alternative Gestaltung der Pumpe sieht vor, daß diese eine Taumelscheibenpumpe ist, wobei mit dem Motorläufer eine Taumelscheibe mitnehmend gekoppelt ist, an der sich mindestens ein Axialkolben abstützt, der in einer am Gehäuse ortsfest angebrachten Kolbenführung axial verschiebbar geführt ist. Diese Gestaltung kann besonders vorteilhaft zusammen mit einem becherförmigen Motorläufer eingesetzt werden, an dessen Boden die Taumelscheibe gekoppelt ist.

### Kurzbeschreibung der Zeichnungen

Weitere Merkmale und Eigenschaften werden anhand der Beschreibung zweier Ausführungsformen unter Bezugnahme auf die beigefügten Zeichnungen erläutert.
- Fig. 1: zeigt eine erste Ausführungsform einer erfindungsgemäßen Motor-/Pumpeneinheit im Längsschnitt.
- Fig. 2: zeigt eine zweite Ausführungsform einer erfindungsgemäßen Motor-/Pumpeneinheit im Längsschnitt.

### Detaillierte Beschreibung einer bevorzugten Ausführungsform

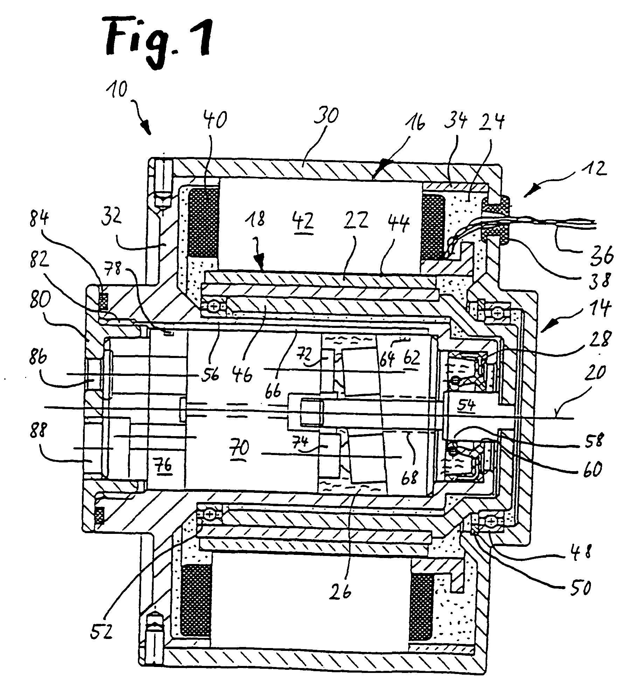

In der Figur 1 ist eine Motor-/Pumpeneinheit 10 dargestellt, die einen Elektromotor 12, in dem dargestellten Ausführungsbeispiel ein bürstenloser Gleichstrommotor, und eine Pumpe 14 umfaßt.

Der Elektromotor 12 ist mit einem hohlzylindrischen Motorstator 16 und einem darin angeordneten Motorläufer 18 gestaltet. Der Motorläufer 18 ist um eine Drehachse 20 drehbar und sein dem Motorstator 16 radial zugewandter Abschnitt weist Permanentmagneten 22 auf. Der Motorläufer 18 ist im wesentlichen hohlzylindrisch gestaltet. In seinem Hohlraum ist die Pumpe 14 koaxial zur Drehachse 20 angeordnet. Die Pumpe 14 wird im Betrieb der Motor-/Pumpeneinheit 10 mit Hilfe des Motorläufers 18 angetrieben, um Bremsfluid zu nicht dargestellten Radbremsen oder von diesen weg zu fördern.

Um eine hochdynamischen Motor-/Pumpeneinheit 10 zu erhalten sind der Motorstator 16 und der radial äußere Teil des Motorläufers 18, also die Permanentmagneten 22, von einem Gasraum 24 (mit Punkten gekennzeichnet) umgeben, in dem sich Luft befindet. Dieser Teil der Motor-/Pumpeneinheit 10 wird als elektromagnetischer Bereich bezeichnet. Ferner ist die Pumpe 14 von einem Fluidraum 26 (mit Wellenlinien gekennzeichnet) umgeben, der mit Bremsfluid gefüllt ist, wobei dieser Teil als hydraulischer Bereich der Motor-/Pumpeneinheit 10 bezeichnet wird. Zwischen dem elektromagnetischen und dem hydraulischen Bereich ist ein ringförmiges Dichtelement 28 angeordnet, das diese Bereiche fluiddicht trennt. Da sich im elektromagnetischen Bereich somit kein Bremsfluid befinden kann, entsteht zwischen Motorstator 16 und Motorläufer 18 keine Fluidreibung. Die Motor-/Pumpeneinheit 10 weist daher eine höhere Dynamik auf. Ferner können der Motorstator 16 und der Motorläufer 18 nicht vom Bremsfluid verschmutzt oder beschädigt werden.

Nachfolgend wird die in Fig. 1 dargestellte Ausführungsform näher beschrieben. Die Motor-/Pumpeneinheit 10 ist außen von einem zur Drehachse 20 rotationssymmetrischen, becherförmigen Gehäuseteil 30 begrenzt, das an einer in Fig. 1 linken Stirnseite mit einem Gehäusedeckel 32 verschlossen ist. Im Gehäuseteil 30 ist axial ein Distanzring 34 und nachfolgend der Motorstator 16 eingesetzt. Der Motorstator 16 ist zwischen dem Distanzring 34 und dem Gehäusedeckel 32 axial gehalten und stützt sich radial am Gehäuseteil 30 ab.

An der dem Gehäusedeckel 32 entgegengesetzten Stirnwand weist das becherförmige Gehäuseteil 30 eine Öffnung auf, durch die eine Zuleitung 36 in das Innere des Gehäuseteils 30 geführt ist. Die Durchführung der Zuleitung 36 ist dabei mittels einer Elastomer-Muffe 38 abgedichtet.

Der Motorstator 16 weist eine Statorwicklung 40 auf, die um einen Eisenkern 42 gelegt ist. Zwischen dem Eisenkern 42 und den Permanentmagneten 22 befindet sich lediglich ein dünner Luftspalt 44.

Der Motorläufer 18 weist einen becherförmigen Läuferkörper 46 auf, der radial außen die Permanentmagneten 22 trägt. Der becherförmige Läuferkörper 46 ist an seinem in Fig. 1 rechten Endabschnitt mittels eines Kugellagers 48 gelagert ist, das im becherförmigen Gehäuseteil 30 von einem Federring 50 gehalten ist. Der dem Kugellager 48 axial entgegengesetzte Endabschnitt des becherförmigen Läuferkörpers 46 ist mit Hilfe eines zweiten Kugellagers 52 im Gehäusedeckel 32 abgestützt. Der Läuferkörper 46 ist von den Lagern 48 und 52 präzise zum Motorstator 16 positioniert. Es kann daher ein besonders dünner Luftspalt 44 gebildet sein. An einem Boden des becherförmigen Läuferkörpers 46 ragt koaxial eine Antriebswelle 54 in den vom Läuferkörper 46 gebildeten Hohlraum. Von der dem Boden des becherförmigen Läuferkörpers 46 gegenüberliegenden Seite ragt ein hohlzylindrischer Gehäuseabschnitt 56 des Gehäusedeckels 32 in den Hohlraum. Dieser Gehäuseabschnitt 56 ist am der Antriebswelle 54 zugewandten Endbereich gestuft und trägt dort das ringförmige Dichtelement 28, das zur Antriebswelle 54 abdichtet. Dabei ist das Dichtelement 28 in den Gehäuseabschnitt 56 eingepreßt und weist zwei Dichtlippen 58 und 60 auf, die an der Antriebswelle 54 anliegen. Das Dichtelement 28 ist U-förmig gestaltet, wobei die Öffnung der U-Form zum hydraulischen Bereich gerichtet ist. Die Dichtlippe 58 wird daher durch hydraulischen Druck an die Antriebswelle 54 gepreßt.

Axial neben dem Dichtelement 28 ist im Gehäuseabschnitt 56 eine Schrägscheibe 62 angeordnet und mittels einer Paßfeder 64 festgelegt, die in eine im hohlzylindrischen Gehäuseabschnitt 56 ausgebildete Längsnut 66 greift. In der Schrägscheibe 62 ist eine koaxiale Bohrung 68 ausgebildet, in der die Antriebswelle 54 die Schrägscheibe 62 durchsetzt. Die Antriebswelle 54 ragt in einen zylindrischen Pumpenrotor 70, der axial neben der Schrägscheibe 62 im Gehäuseabschnitt 56 angeordnet und in diesem drehbar gelagert ist. Die zylindrische Außenfläche des Pumpenrotors 70 wirkt dazu zusammen mit einem Teil der zylindrischen Innenfläche des Gehäuseabschnitts 56 als Gleitlager.

In dem Pumpenrotor 70 sind Axialkolben verschiebbar geführt, von denen in Fig. 1 zwei mit Bezugszeichen 72 und 74 bezeichnet sind. Die Axialkolben 72 und 74 stützen sich an der Schrägscheibe 62 ab, so daß eine Axialkolbenpumpe in Gestalt einer Schrägscheibenmaschine gebildet ist. Auf der der Schrägscheibe 62 entgegengesetzten Stirnseite des Pumpenrotors 70 stützt sich dieser an einem scheibenförmigen Pumpenschild 76 ab, das mittels einer Paßfeder 78 in der Längsnut 66 zum Gehäuseabschnitt 56 drehfest positioniert ist.

An das Pumpenschild 76 schließt axial außen ein Pumpendeckel 80 an, der einen zum Gehäuseabschnitt 56 gerichtete Absatz mit einer radialen Außenverzahnung 82 aufweist. Die Außenverzahnung 82 greift in eine entsprechende, am Gehäusedeckel 32 ausgebildete Innenverzahnung ein. Im Gehäusedeckel 32 ist an der dem Pumpendeckel 80 zugewandten Stirnseite ein Dichtring 84 eingesetzt. Der Pumpendeckel 80 ist somit drehfest angeordnet und verschließt den Gehäusedeckel 32 fluiddicht.

Im Pumpendeckel 80 sind zwei Anschlüsse 86 und 88 ausgebildet, um das Pumpenschild 76 und den Pumpenrotor 70 mit nicht dargestellten Bremsfluidleitungen zu verbinden.

Im Betrieb der Motor-/Pumpeneinheit 10 rotiert der Motorläufer 18 relativ zum Motorstator 16 und dreht dabei die Antriebswelle 54. Die Antriebswelle 54 dreht den Pumpenrotor 70, wobei sich die Axialkolben 72 und 74 verschieben und Bremsfluid fördern. Da die Pumpe 14 keine Ventilsteuerung aufweist, kann durch Umkehren der Drehrichtung der Antriebswelle die Förderrichtung der Pumpe 14 geändert werden.

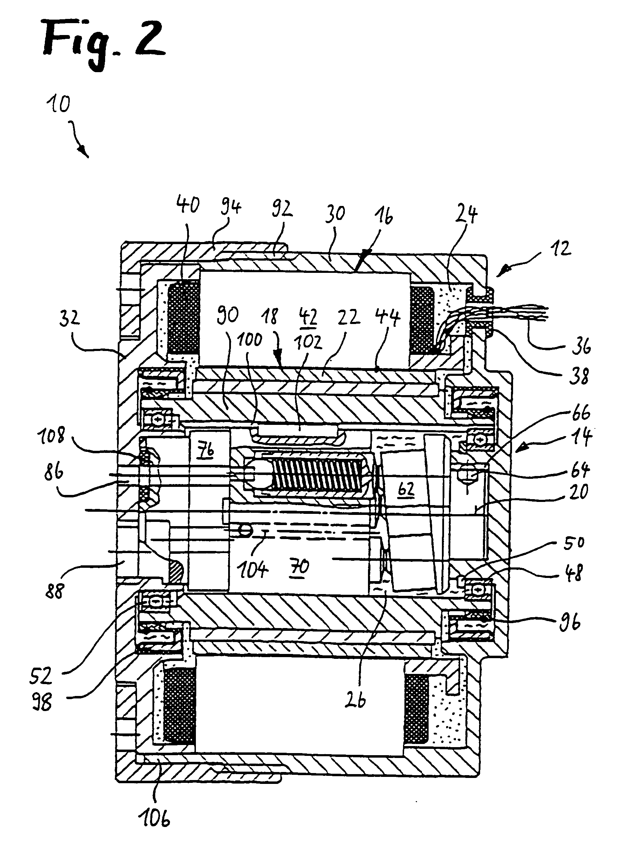

Das in Fig. 2 dargestellte Ausführungsbeispiel gleicht funktional dem in Fig. 1 dargestellten. Im Gehäuseteil 30 ist der Motorstator 16 angebracht, in dem radial innen der Motorläufer 18 drehbar gelagert ist. Der Motorläufer 18 weist dabei einen hohlzylindrischen Läuferkörper 90 auf, der an seinen axialen Endbereichen mit dem Kugellager 48 im Gehäuseteil 30 und mit dem Kugellager 52 im Gehäusedeckel 32 gelagert ist. Das Kugellager 48 ist dabei ebenfalls mit dem Federring 50 festgelegt und bildet ein Festlager, während das Kugellager 52 ein Loslager bildet. Am becherförmigen Gehäuseteil 30 ist ein Außengewinde 92 ausgebildet, auf das ein Verschlußring 94 aufgeschraubt ist. Mit dem Verschlußring 94 ist der Gehäusedeckel 32 an das Gehäuseteil 30 gekoppelt, um die Kugellager 48 und 52 zueinander und den Motorläufer 18 im Motorstator 16 zu positionieren.

Im becherförmigen Gehäuseteil 30 und im Gehäusedeckel 32 ist radial außen um die Kugellager 48 bzw. 52 je ein ringförmiges Dichtelement 96 bzw. 98 angeordnet, das zwischen dem hohlzylindrischen Läuferkörper 90 und dem Gehäuseteil 30 bzw. dem Gehäusedeckel 32 abdichtet. Damit ist wie oben beschrieben der elektromagnetische vom hydraulischen Bereich getrennt.

Die Schrägscheibe 62 ist bei dieser Ausführungsform unmittelbar am Gehäuseteil 30 angebracht und dabei mittels der Paßfeder 64 in der Nut 66 am Gehäuseteil 30 drehfest gesichert. Der Pumpenrotor 70 ist axial daneben angeordnet und weist drei Axialkolben auf. An der Innenfläche des hohlzylindrischen Läuferkörpers 90 ist eine Längsnut 100 ausgebildet. In die Längsnut 100 greift eine Paßfeder 102 ein, die an der Außenfläche des Pumpenrotors 70 ortsfest eingesetzt ist. Der Pumpenrotor 70 ist über die Paßfeder 102 mit dem Motorläufer 18 mitdrehend gekoppelt. Im Pumpenrotor 70 ist ferner eine axiale Durchgangsbohrung 104 ausgebildet, die den Anschluß 88 mit dem Fluidraum 26 verbindet.

Am Gehäusedeckel 32 ist in einem Bereich des Umfangs eine Aussparung ausgebildet, in die eine Nase 106 des Gehäuseteils 30 eingreift. Der Gehäusedeckel 32 ist damit drehfest positioniert. Ferner ist im Pumpenschild 76 ein Dichtring 108 eingesetzt, der zum Gehäusedeckel 32 abdichtet.

Im Betrieb der in Fig. 2 dargestellten Motor-/Pumpeneinheit 10 treibt der Motorläufer 18 über die Paßfeder 102 den Pumpenrotor 70 an. Dabei ist der Motorläufer 18 vom Motorstator 16 nur durch den Luftspalt 44 getrennt, so daß ein hoher magnetischer Fluß gewährleistet ist und der Reibwiderstand zwischen den relativ zueinander rotierenden Teilen vernachlässigt werden kann. Der Pumpenrotor 70 dreht sich mit dem Motorläufer 18 mit, so daß auch zwischen diesen Bauteilen keine Reibung - beispielsweise durch Strömungsreibung von Bremsfluid - auftritt. Die Motor-/Pumpeneinheit 10 weist daher eine besonders hohe Dynamik und ein sehr gutes Anlauf- und Ansprechverhalten auf.

## Patentansprüche

1. Fahrzeugbremsanlage, die eine Motor-/Pumpeneinheit (10) mit einem Elektromotor (12) und wenigstens eine Pumpe (14) zum Fördern von Bremsfluid aufweist, wobei
- der Elektromotor (12) einen Motorstator (16) aufweist, in dem ein Motorläufer (18) drehbar angeordnet ist, und
- die Pumpe (14) im wesentlichen innerhalb des Motorläufers (18) angeordnet und von diesem antreibbar ist,
**dadurch gekennzeichnet, daß**
- der Motorstator (16) und mindestens ein zum Motorstator (16) gerichteter Abschnitt (22) des Motorläufers (18) einen elektromagnetischen Bereich (16, 22, 24) definieren,
- mindestens die Pumpe (14) einen hydraulischen Bereich (14, 26) definiert, und
- mindestens ein Dichtelement (28, 96, 98) vorgesehen ist, das den elektromagnetischen Bereich (16; 22, 24) von dem hydraulischen Bereich (14, 26) fluiddicht trennt, wobei sich zwischen dem Motorstator (16) und dem Motorläufer (18) nur ein Luftspalt (44) befindet.

2. Fahrzeugbremsanlage nach Anspruch 1,
**dadurch gekennzeichnet, daß**
der Motorstator (16) in einem Gehäuse (30, 32, 56) ortsfest angebracht ist, und das Dichtelement (28, 96, 98) ringförmig zwischen dem Motorläufer (18) und dem Gehäuse (30, 32, 56) ausgebildet ist.

3. Fahrzeugbremsanlage nach Anspruch 2,
**dadurch gekennzeichnet, daß** der Motorläufer (18) im Gehäuse (30, 32, 56) um eine Drehachse (20) drehbar mittels zwei Lagern (48, 52) abgestützt ist, die an den axialen Endbereichen des Motorläufers (18) angeordnet sind.

4. Fahrzeugbremsanlage nach Anspruch 2 oder 3,
**dadurch gekennzeichnet, daß** der Motorläufer (18) im wesentlichen becherförmig gestaltet ist (46) und an einem Boden eine koaxial angebrachte und mitnehmend verbundene Antriebswelle (54) zum Antreiben der Pumpe (14) umfaßt.

5. Fahrzeugbremsanlage nach Anspruch 4,
**dadurch gekennzeichnet, daß** das Gehäuse (30, 32, 56) einen im wesentlichen hohlzylindrischen Gehäuseabschnitt (56) aufweist, der radial innen und koaxial in den becherförmigen Motorläufer (18) ragt, und das Dichtelement (28) zwischen dem hohlzylindrischen Gehäuseabschnitt (56) und der Antriebswelle (54) angeordnet ist.

6. Fahrzeugbremsanlage nach Anspruch 2 oder 3,
**dadurch gekennzeichnet, daß** der Motorläufer (18) im wesentlichen hohlzylindrisch gestaltet (90) und an einer inneren Mantelfläche mit der Pumpe (14) mitnehmend verbunden ist (102).

7. Fahrzeugbremsanlage nach Anspruch 6,
**dadurch gekennzeichnet, daß** zwischen den axialen Endabschnitten des Motorläufers (18) und dem Gehäuse (30, 32) je ein Dichtelement (96, 98) angeordnet ist.

8. Fahrzeugbremsanlage nach einem der Ansprüche 1 bis 7,
**dadurch gekennzeichnet, daß** die Pumpe (14) eine Schrägscheibenpumpe ist, wobei mit dem Motorläufer (18) ein Pumpenrotor (70) mitnehmend gekoppelt ist, in dem mindestens ein Axialkolben (72, 74) verschiebbar geführt ist, der sich an einer am Gehäuse (30) ortsfest angebrachten Schrägscheibe (62) abstützt.

9. Fahrzeugbremsanlage nach einem der Ansprüche 1 bis 7,
**dadurch gekennzeichnet, daß** die Pumpe eine Taumelscheibenpumpe ist, wobei mit dem Motorläufer eine Taumelscheibe mitnehmend gekoppelt ist, an der sich mindestens ein Axialkolben abstützt, der in einer am Gehäuse ortsfest angebrachten Kolbenführung axial verschiebbar geführt ist.

10. Motor-/Pumpeneinheit für eine elektrohydraulische Fahrzeugbremsanlage, die die Merkmale einer Motor/Pumpeneinheit (10) aufweist, wie sie in einem oder mehreren der vorhergehenden Ansprüche beschrieben worden ist.

## Claims

1. A vehicle brake system which comprises a motor/pump unit (10) with an electromotor (12) and at least one pump (14) for delivering brake fluid, wherein
- the electromotor (12) comprises a motor stator (16) in which a motor rotor (18) is rotatably disposed, and
- the pump (14) is disposed substantially within the motor rotor (18) and can be driven by the latter,
**characterised in that**
- the motor stator (16) and at least one section (22) of the motor rotor (18) which is directed towards the motor stator (16) define an electromagnetic region (16, 22, 24),
- at least the pump (14) defines a hydraulic region (14, 26), and
- at least one sealing element (28, 96, 98) is provided which separates the electromagnetic region (16, 22, 24) from the hydraulic region (14, 26) in a fluid-tight fashion, wherein there is just an air gap (44) between the motor stator (16) and the motor rotor (18).

2. Vehicle brake system according to Claim 1,
**characterised in that** the motor stator (16) is fitted in a stationary fashion in a casing (30, 32, 56), and the sealing element (28, 96, 98) is formed in an annular fashion between the motor rotor (18) and the casing (30, 32, 56).

3. Vehicle brake system according to Claim 2,
**characterised in that** the motor rotor (18) is rotatably supported in the casing (30, 32, 56) about a rotational axis (20) by means of two bearings (48, 52) which are disposed at the axial end regions of the motor rotor (18).

4. Vehicle brake system according to Claim 2 or 3,
**characterised in that** the motor rotor (18) is substantially cup-shaped (46) and comprises at a bottom a coaxially fitted drive shaft (54), which is connected in a driving fashion, for driving the pump (14).

5. Vehicle brake system according to Claim 4,
**characterised in that** the casing (30, 32, 56) comprises a substantially hollow cylindrical casing section (56) which projects radially inwards and coaxially into the cup-shaped motor rotor (18), and the sealing element (28) is disposed between the hollow cylindrical casing section (56) and the drive shaft (54).

6. Vehicle brake system according to Claim 2 or 3,
**characterised in that** the motor rotor (18) is substantially of a hollow cylindrical shape (90) and connected in a driving fashion (102) to the pump (14) at an inner circumferential surface.

7. Vehicle brake system according to Claim 6,
**characterised in that** a sealing element (96, 98) each is disposed between the axial end sections of the motor rotor (18) and the casing (30, 32).

8. Vehicle brake system according to one of Claims 1 to 7,
**characterised in that** the pump (14) is an inclined plate pump, wherein a pump rotor (70) is coupled in a driving fashion to the motor rotor (18), in which pump rotor at least one axial piston (72, 74) is movably guided, the latter being supported at an inclined plate (62) fitted in a stationary fashion to the casing (30).

9. Vehicle brake system according to one of Claims 1 to 7,
**characterised in that** the pump is a swash-plate pump, wherein a swash plate is coupled in a driving fashion to the motor rotor and supports at least one axial piston, which can be axially displaced in a piston guide that is fitted in a stationary fashion to the casing.

10. A motor/pump unit for an electrohydraulic vehicle brake system having the features of a motor/pump unit (10) as has been described in one or more of the preceding Claims.

## Revendications

1. Installation de freinage de véhicule qui présente une unité moteur-pompe (10) munie d'un moteur électrique (12) et d'au moins une pompe (14) destinée à faire circuler du fluide de freinage, dans laquelle
- le moteur électrique (12) présente un stator de moteur (16) dans lequel est monté rotatif un rotor de moteur (18), et
- la pompe (14) est disposée sensiblement à l'intérieur du rotor de moteur (18) et elle peut être entraînée par ce dernier,
**caractérisée en ce que**
- le stator de moteur (16) et au moins un segment (22) du rotor de moteur (18) qui est dirigé vers le stator de moteur (16) définissent une zone électromagnétique (16, 22, 24),
- au moins la pompe (14) définit une zone hydraulique (14, 26), et
- il est prévu au moins un élément d'étanchéité (28, 96, 98) qui sépare la zone électromagnétique (16, 22, 24) de la zone hydraulique (14, 26) à joint étanche, seulement une fente d'air (44) se trouvant entre le stator de moteur (16) et le rotor de moteur (18).

2. Installation de freinage de véhicule selon la revendication 1, **caractérisée en ce que** le stator de moteur (16) est logé en position fixe dans un carter (30, 32, 56) et l'élément d'étanchéité (28, 96, 98) est réalisé avec une forme annulaire entre le rotor de moteur (18) et le carter (30, 32, 56).

3. Installation de freinage de véhicule selon la revendication 2, **caractérisée en ce que** le rotor de moteur (18) est monté dans le carter (30, 32, 56), rotatif autour d'un axe de rotation (20), au moyen de deux paliers (48, 52) qui sont disposés aux régions terminales axiales du rotor de moteur (18).

4. Installation de freinage de véhicule selon la revendication 2 ou 3, **caractérisée en ce que** le rotor de moteur (18) est sensiblement en forme de godet (46) et **en ce qu'**il comprend, au niveau d'un fond, un arbre d'entraînement (54) disposé coaxialement et relié cinématiquement pour l'entraînement de la pompe (14).

5. Installation de freinage de véhicule selon la revendication 4, **caractérisée en ce que** le carter (30, 32, 56) présente un segment de carter sensiblement cylindrique creux (56) qui est engagé radialement à l'intérieur et coaxialement dans le rotor de moteur (18) en forme de godet, et **en ce que** l'élément d'étanchéité (28) est disposé entre le segment de carter cylindrique creux (56) et l'arbre d'entraînement (54).

6. Installation de freinage de véhicule selon la revendication 2 ou 3, **caractérisée en ce que** le rotor de moteur (18) est sensiblement cylindrique creux (90) et est relié cinématiquement (102) à la pompe (14) au niveau d'une surface latérale intérieure.

7. Installation de freinage de véhicule selon la revendication 6, **caractérisée en ce qu'**un élément d'étanchéité (96, 98) est disposé entre chacun des segments terminaux axiaux du rotor de moteur (18) et le carter (30, 32).

8. Installation de freinage de véhicule selon une des revendications 1 à 7, **caractérisée en ce que** la pompe (14) est une pompe à plateau oblique, un rotor de pompe (70) étant accouplé cinématiquement au rotor de moteur (18), rotor de pompe dans lequel est guidé, mobile en translation, au moins un piston axial (72, 74) qui prend appui contre un plateau oblique (62) attaché en position fixe au carter (30).

9. Installation de freinage de véhicule selon une des revendications 1 à 7, **caractérisée en ce que** la pompe est une pompe à plateau oscillant, un plateau oscillant étant accouplé cinématiquement au rotor de moteur, plateau oscillant contre lequel s'appuie au moins un piston axial qui est guidé mobile en translation axiale dans un guide de piston attaché au carter en position fixe.

10. Unité moteur-pompe pour une installation de freinage de véhicule électro-hydraulique qui présente une unité moteur-pompe (10) telle qu'elle a été décrite dans une ou plusieurs des revendications précédentes.
